# EUROPEAN PATENT APPLICATION

(11) **EP 0 739 583 A1**
(43) Date of publication of application: **30.10.1996**
(21) Application number: 95106311.4
(22) Date of filing: 27.04.1995
(51) Int. Cl.: A01G 9/10

(54) **Continuously assembled pots for raising and transplanting seedlings**

(71) Applicant: NIHON TENSAISEITO KABUSHIKI KAISHA, Chuo-ku Tokyo (JP)
(72) Inventor: Ito, Sumio, Obihiro-shi, Hokkaido (JP); Terasawa, Hidekazu, Obihiro-shi, Hokkaido (JP); Sasaki, Yukio, Obihiro-shi, Hokkaido (JP)
(74) Representative: Patentanwälte Wenzel & Kalkoff

(57) **Abstract**

A continuously assembled pots (1) for raising and transplanting seedlings comprising a plurality of cylindrical pots (1) made of paper or like other sheet connected by means of connection members (2) into a continuous form, each of the adjacent pots (1) is bonded to each other by means of a water soluble adhesive to form a continuously assembly, in which slits (3) are disposed to a connection member (2) for connecting between each of the pots (1) or the lateral side of the pot (1), to form a connection member (2) extensible in accordance with the intrarow spacing. Since the length of the connection member (2) between each of the pots (1) is made extensible by the slits (3) disposed to the connection member (2) or both lateral sides of the pots (1), the assembled pots (1) can be applied to various kinds of plants to be transplanted.

## Description

### BACKGROUND OF THE INVENTION

### Field of the Invention and Related Statement

The present invention concerns continuously assembled pots for raising and transplanting seedlings, capable of pulling out individual pots in a continuous strip by means of connection members, each manner having a predetermined width and a length which is made adjustable for an intrarow spacing of seedlings to be transplanted.

Assembled pots for raising and transplanting seedlings comprising a plurality of tetragonal or hexagonal cylindrical bodies made of paper or like other sheet bonded with a water soluble adhesive into an assembly have been used for raising and transplanting seedlings, for example, of paddy rise, beet, vegetable and flowering tree.

Such assembled pots are folded compact during storage and developed upon use into a plurality of cylindrical pots to which soils are filled. Then, after seeding and raising seedlings for certain days, they are divided into individual pots and transplanted into fields. Transplantation can be conducted automatically in a man power-saving manner by using a transplanting machine.

In assembled pots disclosed, for example, in Japanese Patent Publication Sho 55-30805, cylindrical pots are connected by means of connection members into a strip-like continuously assembled pots. Upon transplantation, they are pulled out from one end and a preceding pot is disconnected from a succeeding pot at a connection member between them and transplanted as an individual pot in the course of pulling out.

In a case of continuously assembled pots for raising and transplanting seedlings in which each of adjacent pots is connected by the connection member, a separation line for disconnection is disposed at a central portion of the connection member. The continuously assembled pots are put between a pair of upper and lower rollers rotating at different circumferential speeds and the separation line is disconnected gradually from upper to lower portion vertically if the seedling pot is long, for example, in a case of beet. In a short seedling pot such as for vegetables, when a preceding seedling pot is sized and pulled by a planting holder, a succeeding seedling pot is fixed by a stopper, thereby disconnecting the connection member along a separation line and then the separated preceding seedling pot is planted to the field.

Further, for continuously pulling out such seedling pots and then planting them in a continuous state as they are, Japanese Patent Publication Sho 54-18321 discloses a method of bonding individual pots on every predetermined interval to a long string by means of a water insoluble starch such that the pots are arranged continuously for a predetermined intrarow spacing upon transportation, bonding such pots in plurality together with the string by a water soluble starch to form continuously assembled pots for raising and transplanting seedlings, pulling out them from one end upon transplantation and planting continuously in the form of a strip as they are to a field.

As described above, assembled pots separated into individual seedlings pots upon transportation have been predominant in the prior art, since planting spacings of transplanted plants are different variously depending on the case. In the continuously assembled pots for raising and transplanting seedlings capable of being pulled out continuously by connection members, they are manufactured not by appending a separate connection member to each of folded cylindrical members but manufactured continuously as shown in Japanese Patent Publication Sho 58-11817 or Japanese Patent Publication Hei 4-79612 by forming pot bodies and connection members from two paper rolls successively pulled out and integrated with each other. Two sheets of paper are laminated and bonded together by means of a water soluble starch on every predetermined length by coating a water in soluble starch for 1/3 length of a folded cylindrical member on every length of the folded cylindrical member into continuously assembled pots for raising and transplanting seedlings. As a result, when they are developed, they form an assembly of hexagonal honeycomb cylinders, and portions bonded with the water insoluble starch constitute connection members upon transplantation. Although, this is an effective manufacturing method, the portion coated with the water insoluble starch can not exceed 1/3 length of the folded cylindrical body, so that the length of the connection member is always restricted to 1/3 length of the folded pot member. Therefore, in a case of practicing a method proposed by the present applicant in Japanese Patent Application Hei 4-142080 of successively pulling out and planting the continuously assembled pots for raising and transplanting seedlings in the form of a continuous strip from a skid-like sliding body while maintaining the continuous state, the planting spacing is always fixed to such an intrarow spacing as limited to 1/3 pot length, so that the method can be applied only to the planting of a restricted range of seedlings.

Further, in continuously assembled pots for raising and transplanting seedlings in which each of pots is connected by means of a string at a predetermined spacing as disclosed in Japanese Patent Publication Sho 54-28321, it has required for such troublesome operation of bonding a string, which is different in view of the material and the shape from those of the pot, by water soluble and insoluble starches at a predetermined spacing to each of the pots while folding them.

### OBJECT AND SUMMARY OF THE INVENTION

In view of the foregoing situations, the present inventor has made an earnest study for obtaining continuously assembled pots for raising and transplanting seedlings, capable of planting seedlings as they are at a predetermined intrarow spacing adjustable for the planting distance of seedlings to be transplanted while pulling out the assembled seedling pots for raising and transplanting seedlings continuously from one to the other ends successively. As a result, while taking notice on a method developed by the present applicant and disclosed in Japanese Patent Application Hei 4-142080 of pulling out continuously assembled pots for raising and transplanting seedlings connected with connection members integrated with the pots, it has been attained a continuously assembled pots for raising and transplanting seedlings, capable of planting seedling at a predetermined intrarow spacing by merely pulling out the assembly continuously without separating them into individual pots by disposing slits on a connection member or a lateral side of a pot, making the spacing of the connection member extensible between each of the pots for coping with the intrarow spacing for each of seedlings to be transplanted, and then transplanting them as they are.

The continuously assembled pots for raising and transplanting seedlings according to the present invention are suitable to use for plants having the intrarow spacing of about 10 cm such as welsh onion, Chinese chive, spinach and chrysanthemums, and the pot used for this purpose usually has a relatively small diameter of about 2 to 3 cm and if the weight of the pot filled with the soils is too heavy, a large load tends to exert on the connection member and cause disconnection.

For connecting seedling pots by connection members into continuously assembled pots for raising and transplanting seedlings and planting them as they are in the connected state, the present applicant has already proposed, in Japanese Patent Application Hei 4-142080, as has been described above previously, to mount the continuously assembled pots for raising and transplanting seedlings on a skid-like plate member having side frames that slide on the upper surface of the farm yard and pulled out the continuously assembled pots for raising and transplanting seedlings successively from the delivery portion disposed at the back of the skid-like plate member in accordance with the running of the skid-like plate member, thereby enabling to plant seedlings on hallows.

However, since the continuously assembled pots for raising and transplanting seedlings are connected each by a connection member having a length equal with each side of the hexagonal shape, intrarow spacing upon planting has been restricted to the narrow length of the connection member. The present invention makes it possible to conduct transplanting operation at a planting interval in accordance with the intrarow spacing of seedlings to be transplanted, by using continuously assembled pots for raising and transplanting seedlings in which the length of the connection member is made extensible in accordance with the planting spacing by disposing slits to the connection member or to the lateral side of the pot.

For the continuously assembled pots for raising and transplanting seedling in the present invention, any of sheet materials can be used satisfactorily providing that the extensible connection member formed by disposing slits to the connection member or the lateral side of the pot has a strength enough to withstand the pulling force for pulling out upon planting, and there can be mentioned, for example, existent synthetic fiber paper formed by mixing synthetic fibers in a paper-making process, corrosion resistant paper as disclosed in Japanese Patent Publication Hei 2-23640 in which the wet strength is increased by treating synthetic fiber mixed paper with a chemical agent, non-corrosive non-woven sheet and paper formed by treating natural pulp and synthetic fiber mixed paper with corrosion inhibitor such as a sterilizer as disclosed in Japanese Patent Publication Sho 59-20325.

### BRIEF DESCRIPTION OF THE DRAWINGS

Fig. 1 is a perspective view of a preferred embodiment of continuously assembled pots for raising and transplanting seedlings in a developed state according to the present invention;
Fig. 2 is a side elevational view of a preferred embodiment of slits disposed to a connection member in the present invention;
Fig. 3 is a side elevational view when the slits disposed to the connection member shown in Fig. 2 are extended;
Fig. 4 is a side elevational view of another embodiment of slits disposed to a connection member in the present invention;
Fig. 5 is a side elevational view when the slits disposed to the connection member shown in Fig. 4 are extended;
Fig. 6 is a side elevational view of a further embodiment of slits disposed to a connection member in the present invention; and
Fig. 7 is a side elevational view when the slits disposed to the connection member shown in Fig. 6 are extended.

### DESCRIPTION OF THE PREFERRED EMBODIMENTS

Various shapes of slits for making a connection member that connects each of pots are shown with reference to the drawings.

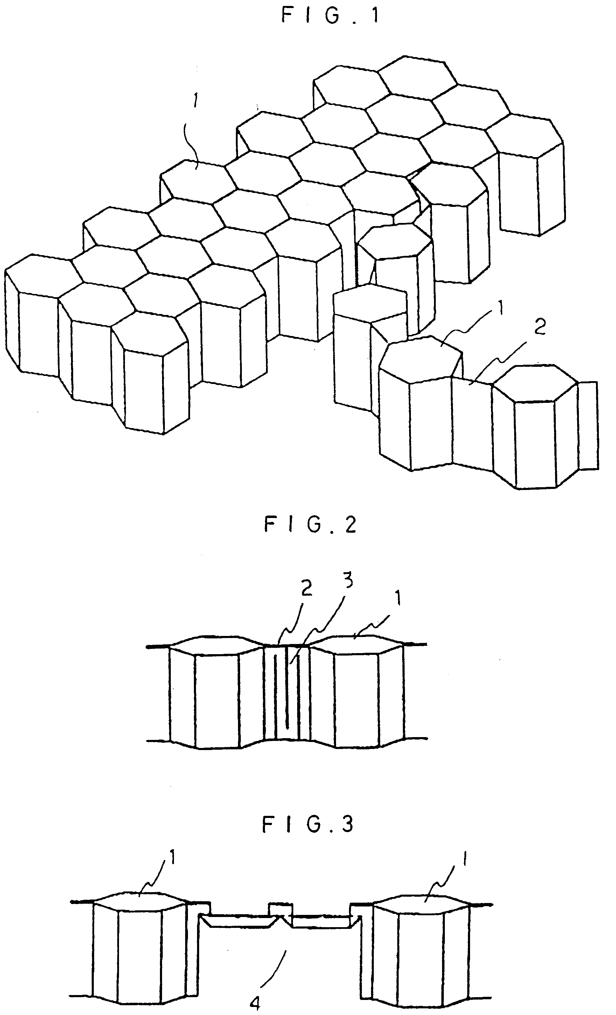

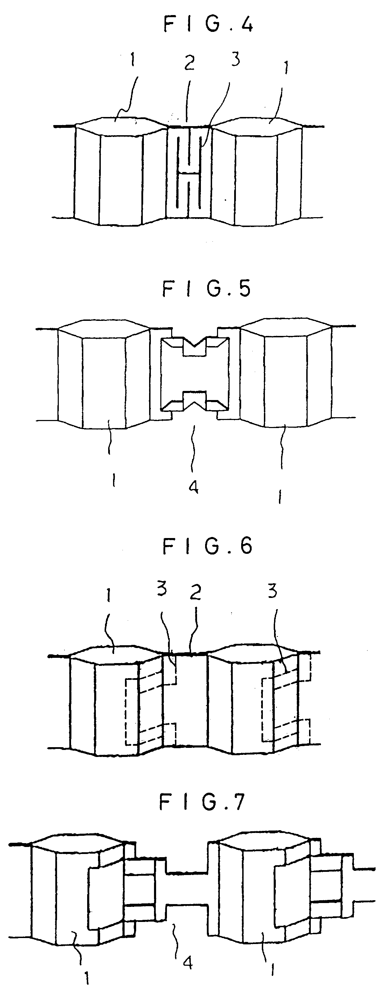

A connection member 2 for connecting pots 1 of assembled pots for raising and transplanting seedlings shown in Fig. 1 has slits 3 as shown in Figs. 2, 4 and 6 (in Fig. 6 slits are shown in a dotted line) for making the connection member extensible, by which the connection member 2 is extended as shown in Figs. 3, 5 and 7 upon transplantation while maintaining seedling pots in a continuous state. The shape of the slits includes, for example, a plurality of slits 3 formed alternately along vertical direction from upper and lower sides to the connection member as shown in Fig. 2, slits 3 comprising an H-shaped slit and upper and lower slits formed at a central portion of the H-shaped slit formed to the connection member as shown in Fig. 4, or U-shaped slits 3 formed from the base of the connection member to both adjacent lateral sides of the pot as shown in Fig. 6. Each of the connection members provided with the slits described previously is extended upon transplantation as shown in Fig. 3, 5 or 7.

The extending length of the connection member in the present invention can be varied optionally depending on the diameter and the height of the pot, and the number and the length of the slits. The size of the pot and the shape of the slit can be selected such that they can sufficiently withstand the tensile force and enable satisfactory transplantation upon transplantation while pulling out the assembled pots kept in a continuous state, by taking the intrarow spacing suitable to the plants to be transplanted, the weight of culturing medium filled in the pot, etc into consideration.

In the present invention, since the slits 3 are disposed to the connection member 2 or both lateral sides of the pot 1 of the continuously assembled pots for raising and transplanting seedlings in which each of the pots 1 is connected by means of the connection member, the slits 3, upon pulling out the assembled pots successively from one end continuously in a strip are extended in the pulling out direction to provide an extended connection member 4. Then, the assembled pots are pulled out continuously and seedlings can be transplanted in accordance with the intrarow spacing of the seedlings to be transplanted, with the spacing between each of the adjacent pots 1 being extended from the initial length of the connection member 2.

### Example 1

Corrosion resistant paper of 50 g/m² of unit area weight prepared by treating with dimethylol dihydroxyl ethylene urea as a corrosion inhibitor is successively delivered from a paper roll, and a water resistant adhesive (acrylic emulsion adhesive) was coated on the paper in a direction perpendicular to the delivering direction for a length of 14.5 mm and at a 43.5 mm pitch. Meanwhile, corrosion resistant paper prepared by the same treatment is delivered out of another paper roll and then appended on the above-mentioned corrosion resistant paper to form a continuous strip. In the strip, the adhesive coating portion constitutes a connection member and an adhesive non-coating portion constitutes a pot portion. 44 units each comprising six coating areas of 14.5 mm length and six non-coating areas of 43.5 mm length were alternately folded right-to-left and bonded with a water soluble adhesive (polyvinyl alcohol type adhesive). The thus folded continuously assembled pots for raising and transplanting seedlings are developed into continuously assembled pots for raising and transplanting seedlings in which hexagonal cylindrical pots each having 14.5 mm side were connected by means of a connection member of 14.5 mm length, and the height of the pot was 50 mm. Slits of 40 mm height were disposed vertically each at 3.625 mm interval to the adhesive coating portion of the strip alternatively by using a three rotary cutter. Culture soils were filled and seeds of Chinese chive were seeded and raised for 30 days. Then, the continuously assembled pots for raising and transplanting seedlings were set to a grounded type continuous seedling pot pulling out transplanting machine having a transplanting seedling mounting portion sized 320 mm x 800 mm and running at a speed of 0.6 m/min for transplantation. Transplantation for 1.0 are was completed within 0.2 hours by 14 sets with no intermediate disconnection and transplantation could be conducted satisfactorily.

Further, the intrarow spacing was also satisfactory as 1300 mm/10 of the planted intrarow spacing relative to the calculated length of 116 mm of the extended connection member.

### Example 2

A non-woven sheet of 50 g/m² of unit area weight prepared by blending vinylon fibers of 1 denier x 6 mm as the basic material and easily soluble PVA binder fibers of 1 denier x 3 mm were blended at 3:1 ratio and subjecting to a paper making process was delivered successively. A water resistant adhesive (EVA hot melt) was coated on the paper in a direction perpendicular to the delivering direction for a length of 17.8 mm and at a 53.4 mm pitch. Meanwhile, non-woven sheet by the same treatment is delivered out of another paper roll and then appended on the above-mentioned corrosion resistant paper to form a continuous strip. In the strip, the adhesive coating portion constitutes a connection member and an adhesive non-coating portion constitutes a pot portion. 36 units each comprising five coating areas of 17.8 mm length and five non-coating areas of 53.4 mm length were alternately folded right-to-left and bonded with a water soluble adhesive (polyvinyl alcohol type adhesive). The thus folded continuously assembled pots for raising and transplanting seedlings were developed into continuously assembled pots for raising and transplanting seedlings in which hexagonal cylindrical pots with 17.8 mm side were connected by means of a connection member of 17.8 mm length, and the height of the pot was 75 mm. An H-shaped slit (60 mm height for each of right and left vertical lines and 8.9 mm length for central horizontal line) is formed to a central portion of the adhesive coating portion of the strip, and slits each of 30 mm height were formed vertically from corresponding upper and lower side edges at a center between each of right and left vertical lines by using a rotary cutter. Culture soils were filled and seeds of spinach were seeded and raised for 25 days. Then, the continuously assembled pots for raising and transplanting seedlings were set to a grounded type continuous seedling pot pulling out transplanting machine having a transplanting seedling mounting portion sized 320 mm x 800 mm and running at a speed of 0.6 m/min. Transplantation for 1.0 are was completed within 0.3 hours by 20 sets with no intermediate disconnection and transplantation could be conducted satisfactorily.

Further, the intrarow spacing was also satisfactory as 1000 mm/10 of the planted intrarow spacing relative to the calculated length of 90 mm of the extended connection member.

### Example 3

A paper roll of unbleached craft paper of 60 g/m² of unit area weight prepared by a paper making process with addition of 1% by weight of 8-oxyquinoline copper as a sterilizer to craft pulp was successively delivered. A water resistant adhesive (vinyl acetate type adhesive) was coated on the paper in a direction perpendicular to the delivering direction for a length of 14.5 mm and at a 43.5 mm pitch. Meanwhile, unbleached craft paper prepared was delivered out of another paper roll and then appended on the above-mentioned paper to form a continuous strip. In the strip, the adhesive coating portion constitutes a connection member and a adhesive non-coating portion constitutes a pot portion. 44 units each comprising six coating areas of 14.5 mm length and six non-coating areas of 43.5 mm length were alternately folded right-to-left and bonded with a water soluble adhesive (polyvinyl alcohol type adhesive). The thus folded continuously assembled pots for raising and transplanting seedlings were developed into continuously assembled pots for raising and transplanting seedlings in which hexagonal cylindrical pots with 14.5 mm side were connected by means of a connection member of 14.5 mm length, and the height of the pot was 37.5 mm. U-shaped slits comprising 43.5 mm lateral lines and 26 mm vertical line were disposed from the base end of the bonded portion to the non-adhesive coating area of the strip by using a rotary cutter. Cultures soil were filled and seeds of lettuce were seeded and raised for 20 days. Then, the continuously assembled pots for raising and transplanting seedlings were set to a grounded type continuous seedling pot pulling out transplanting machine having a transplanting seedling mounting portion sized 320 mm x 800 mm and running at a speed of 0.8 m/min for transplantation. Transplantation for 1.0 are was completed within 0.3 hours by 12 sets with no intermediate disconnection and transplantation could be conducted satisfactorily.

Further, the intrarow spacing was also satisfactory as 1350 mm/10 of the planted intrarow spacing relative to the calculated length of 116 mm of the extended connection member.

In the continuously assembled pots for raising and transplanting seedlings according to the present invention, since the length of the connection member between each of the pots is made extensible by the slits disposed to the connection member or both lateral sides of the pot the assembled pots can be applied in the continuously pulled out to wider range of plants to be transported by optionally varying the adjustable length.

In addition, in the continuously assembled pots for raising and transplanting seedlings according to the present invention, extension of the connection member can be adjusted easily by merely stacking two sheets one above the other, disposing the bonding portion and the non-bonding portion and providing a plurality of slits to the bonding portion or the non-bonding portion, and the assembled pots can be manufactured extremely easily.

## Claims

1. A continuously assembled pots for raising and transplanting seedlings comprising a plurality of cylindrical pots made of paper or like other sheet connected by means of connection members into a continuous form, each of the adjacent pots is bonded to each other by means of a water soluble adhesive to form a continuously assembly, in which slits are disposed to a connection member for connecting between each of the pots or the lateral side of the pot, to form an connection member extensible in accordance with the intrarow spacing.

2. A continuously assembled pots for raising and transplanting seedlings as defined in claim 1, wherein each of adjacent pots is connected by means of the connection member, and a plurality of slits are formed vertically and alternately from upper and lower sides of said member.

3. A continuously assembled pots for raising and transplanting seedlings as defined in claim 1, wherein each of adjacent pots is connected by means of the connection member, and H-shaped slits are disposed and slits are formed vertically from upper and lower sides to the H-shaped portion.

4. A continuously assembled pots for raising and transplanting seedlings as defined in claim 1, wherein each of adjacent pots is connected by means of a connection member, and U-shaped slits are disposed from the base of the connection member to both lateral sides of the pot.
